# EUROPÄISCHE PATENTSCHRIFT

(11) **EP 3 844 333 B1**
(45) Veröffentlichungstag und Bekanntmachung des Hinweises auf die Patenterteilung: **12.04.2023**
(21) Anmeldenummer: 19753079.3
(22) Anmeldetag: 13.08.2019
(51) Int. Cl.: D04H 1/62, A41D 27/06, D04H 1/66

(54) **FLÄCHENGEBILDE MIT NACHHALTIGER KLEBSTOFFBESCHICHTUNG**
SHEET MATERIAL HAVING A SUSTAINABLE ADHESIVE COATING
STRUCTURE PLANE DOTÉE D'UN REVÊTEMENT ADHÉSIF DURABLE

(30) Priorität: 31.08.2018 DE 102018214839
(43) Veröffentlichungstag der Anmeldung: 07.07.2021
(73) Patentinhaber: Kufner Holding GmbH, 82008 Unterhaching (DE)
(72) Erfinder: TIMM, Christoph, 8700 Leoben (AT)
(74) Vertreter: Hoffmann Eitle
(86) Internationale Anmeldenummer: PCT/EP2019/071695
(87) Internationale Veröffentlichungsnummer: WO 2020/043480

(56) Entgegenhaltungen:
- WO-A1-2018/038671
- DE-A1- 10 347 665

## Beschreibung

Diese Erfindung betrifft ein heißsiegelbares textiles Flächengebilde mit einem Träger auf Basis eines Gewebes, Gewirkes, gegebenenfalls mit Schusseintrag, oder eines Vlieses und einer darauf aufgebrachten Klebstoffbeschichtung.

### Hintergrund der Erfindung

Einlagen, die das unsichtbare Gerüst einer Vielzahl von Bekleidungsstücken sind, sind bereits seit langem bekannt, (s. DE 10 2014 000417 A1, DE 103 47 665 A1) und werden unter anderem zur Verstärkung des Vorderteils von Bekleidungsstücken oder zur Verstärkung von Krägen und Manschetten eingesetzt. Diese Einlagen bestehen üblicherweise aus einem Träger, der als Gewebe, Gewirke oder auch als Vlies ausgebildet sein kann, und aus einer darauf meist in Rasterform aufgebrachten, üblicherweise thermoplastischen Klebemasse, wobei diese Klebstoff-Zusammensetzung bei Anwendung von Wärme und Druck eine gute Verbindung mit dem Oberstoff der Bekleidungsstücke ermöglicht. Gängige Raster verwenden 1-200 Punkte/cm², bevorzugt 20-150 Punkte/cm².

Solche Einlagen sollen das Kleidungsstück formgerecht gestalten und stabilisieren. Da sie mit dem Oberstoff verklebt werden, beeinflussen sie den Charakter des fertigen Kleidungsstückes in entscheidender Weise. Die Optik, Formstabilität, Weichheit, der Tragekomfort sowie die Pflegeeigenschaften bei der Reinigung, der Wäsche, dem Bügeln und Trocknen hängen entscheidend von der Art und dem Aufbau der verwendeten Einlage ab wie aus DE 10 2007 006568 A1 bekannt ist.

Besonders wichtige Eigenschaften der Bekleidungsstücke sind hierbei die Optik, der Griff und das Pflegeverhalten des fertigen Bekleidungsstücks.

Neben der Bekleidung finden derartige Einlagen auch Verwendung als technischen Textilien z.B. in der Möbel- und Polster- sowie der Automobil- und Luftfahrtindustrie.

Üblicherweise wird die Klebstoff-Zusammensetzung in Form eines Doppelpunktes, bestehend aus einem Unter- und Oberpunkt wie in DE 22 14 236 und DE 22 31 723 beschrieben, aufgetragen. Der viskos-pastöse Unterpunkt wird hierbei auf das Trägermaterial aufgedruckt, z.B. mittels Schablonensiebdruck oder Gravurwalze und der Oberpunkt in Form von pulverförmigem Heißschmelzklebstoff aufgestreut. Ober- und Unterpunkt unterscheiden sich nach DE 22 31 723 durch den jeweiligen thermoplastischen Fluss. Der Unterpunkt hat die Funktion, einerseits die Verbindung zwischen Trägermaterial und Oberpunkt herzustellen und andererseits beim Fixieren das Durchfließen des Oberpunktes auf die Rückseite des Trägermaterials, so genanntes Durchschlagen/Rückvernietung zu verhindern. Der Oberpunkt bestimmt maßgeblich die Haftungseigenschaften und sorgt für die Verbindung von Einlage und Oberstoff. Der Aufbau der jeweiligen Klebstoff-Zusammensetzungen für Ober- und Unterpunkt hat wesentlichen Einfluss auf die Eigenschaften der Einlagen und des Verbunds aus Einlage und Oberstoff. Insbesondere werden die Haftung der Einlage zum Oberstoff, die Waschbeständigkeit und der textile Griff des Verbundes durch eine geeignete Materialauswahl bestimmt.

Sowohl Unter- als auch Oberpunkt setzen sich in der Regel aus thermoplastischen Kunststoffen wie z.B. aus Polyethylen, Polyurethan, Polyacrylat, Copolyester und/oder Copolyamid zusammen.

An die Zusammensetzung des Unterpunktes werden in Bezug auf die Produzierbarkeit diverse Anforderungen gestellt. Die Pastenmasse muss mit den gängigen Pumpsystemen förderbar sein und möglichst sauber und rückstandsfrei verdruckbar sein. Das heißt sie muss sauber durch bzw. aus der Druckform auf den Träger fließen, es sollen sich keine Ablagerungen auf der Druckform bilden, da dies zu einem unsauberen Druckbild oder Punktraster führen würde. Hierfür ist es vorteilhaft, wenn die Paste eine möglichst geringe Viskosität und Feststoffgehalt besitzt.

Die Paste soll nach dem Druckvorgang einen guten Stand besitzen, d.h. nicht zu stark in den Träger einziehen und einen idealerweise halbkugelförmigen Druckpunkt ausbilden. Hierzu ist es vorteilhaft, wenn die Paste eine höhere Viskosität und ein thixotropes Viskositätsprofil besitzt.

Nach dem Aufstreuen des Oberpunktes wird das beschichtete Trägermaterial durch einen Trockentunnel gefahren, um die Lösungsmittelanteile des Unterpunktes zu entfernen und Ober-und Unterpunkt miteinander und dem Träger zu verbinden, so genanntes Ansintern. Hierbei ist es im Hinblick auf den Energieverbrauch vorteilhaft, wenn die Paste einen möglichst hohen Feststoffgehalt besitzt. Der Verbund sollte sich auch durch einen weichen textilen Griff auszeichnen.

Ein diesem Eigenschaftsprofil entsprechender Unterpunkt setzt sich üblicherweise aus einem oder mehreren thermoplastischen Kunststoffen, wie z.B. Polyethylen, Polyurethan, Polyacrylat, Polyvinylchlorid, Polyvinylacetat, Copolyester und/oder Copolyamid-Polymeren, Laufhilfsmitteln wie z.B. (Poly)ethylenglycol, (Poly)propylenglycol, Glycerin, organischen oder mineralischen Verdickern wie z.B. Polyacrylate, Polyurethane, Methyl-, Ethyl-Cellulose, Bentonite, Kieselsäure, Wasser und ggf. üblichen weiteren Hilfsmitteln wie z.B. optische Aufheller und Vernetzer zusammen.

Die verwendeten Materialien werden hierbei zum größten Teil ausgehend von fossilen Rohstoffen hergestellt. Im Zuge der steigenden Nachfrage nach nachhaltigen und/oder aus nachwachsenden Rohstoffen hergestellten Produkten sind mittlerweile sowohl Polyamide, Polyethylen, Polyester und Polyurethane, die ganz oder anteilig aus nachwachsenden Rohstoffen hergestellt werden, kommerziell verfügbar; z.B. unter den Markennamen Dynacoll Terra (Evonik), Platamid Rnew (Arkema), Impranil Eco (Covestro). Die hierbei verwendeten biobasierten Rohstoffe sind identisch mit den üblicherweise verwendeten fossilen Rohstoffen (drop in, entspricht naturidentisch). Es handelt sich z.B. um aus Rizinusöl gewonnene Carbonsäuren, welch an Stelle von aus Erdöl gewonnenen Carbonsäurenäuren in der Monomersynthese für die Polyamidpolymerisation (z.B. Vestamid terra (Evonik), Paltamid Rnew (Arkema)) Anwendung finden.

Des Weiteren werden aus Kohlenhydraten Ethanol und Bernsteinsäure hergestellt, die als Ausgangsstoffe für die Herstellung von Polyethylen, Polyethylenglycol sowie weiteren Polyalkoholen, die in der Herstellung von Polyurethanen (z.B. Impranil Eco (Covestro)) eingesetzt werden können, dienen.

Durch den Einsatz dieser Produkte in den für Einlagestoffe üblichen Klebstoff-Zusammensetzungen lassen sich Gehalte von nur bis zu etwa 50% in der Klebstoff-Zusammensetzung erreichen. Nachteilig hierbei ist einerseits die noch eingeschränkte Verfügbarkeit von Produkten, die über die nötigen Eigenschaften, wie Z.B. Schmelzpunkt und Viskosität eines gängigen Streupulvers, verfügen und der in der Regel deutlich höhere Preis eines Produktes aus nachwachsenden Rohstoffen im Vergleich zum konventionell erzeugten Produkt aus fossilen Rohstoffen. Daher hat sich die Verwendung dieser Produkte für kostengünstige Massenartikel wie Einlagestoffe für Bekleidung nicht durchsetzen können.

Ein Ziel dieser Erfindung ist, eine Einlage anzugeben, deren Klebstoff-Zusammensetzung aus einem möglichst hohen Anteil nachwachsender Rohstoffe erzeugt ist, ohne dass solche Einlagematerialien zu deutlich höheren Kosten führen. Gleichzeitig sollen die gewünschten Eigenschaften wie ausreichende Haftung der Einlage mit dem Oberstoff, Wasch- und Reinigungsbeständigkeit, textiler Griff sowie geringes Durchschlagen oder Rückschlagen der Klebstoffbeschichtung beibehalten bleiben.

Überraschenderweise wurde gefunden, dass eine kostengünstige Klebstoff-Zusammensetzung verwendet werden kann, die zu einem hohen Anteil aus nachwachsenden Rohstoffen erzeugt ist und die oben genannten Anforderungen erfüllt. Erfindungsgemäß wird daher eine Klebstoff-Zusammensetzung angegeben, die wie in den Ansprüchen angegeben zusammengesetzt ist und bevorzugt zu mindestens 70% und besonders bevorzugt vollständig aus nachwachsenden Rohstoffen besteht. Diese Zusammensetzung wird auf einen Träger auf Basis eines Gewebes, Gewirkes, gegebenenfalls mit Schusseintrag, oder eines Vlieses in Punktform bevorzugt in Rasterform aufgebracht, unter Erhalt eines heißsiegelfähigen Flächengebildes.

In Kombination mit dem textilen Flächengebilde und den entsprechenden Ausrüstungschemikalien aus nachwachsenden Rohstoffen ergibt sich ein zu 90-100% aus nachwachsenden Rohstoffen zusammengesetztes heißsiegelbares textiles Flächengebilde, welches insbesondere als Einlagestoff für Bekleidung verwendet werden kann.

In dieser Erfindung ist eine Klebstoffbeschichtung in Form eines Doppelpunktes bevorzugt in Rasterform durch ein übliches Verfahren auf den Träger aufgetragen. Dabei besteht der Unterpunkt aus der erfindungsgemäßen Klebstoff-Zusammensetzung und der Oberpunkt kann aus herkömmlichen Materialien wie zum Beispiel Polyamid (z.B. Platamid^{®}) oder auch aus Polymilchsäure-Pulver erzeugt werden. Jedoch können alle gängigen Pulvermaterialien eingesetzt werden, die streufähig sind und auf den Unterpunkt aufgestreut werden können.

Bei Kombination der Klebstoff-Zusammensetzung als Unterpunkt mit einem kommerziell verfügbaren, anteilig aus nachwachsenden Rohstoffen hergestelltem Klebstoffpulver als Oberpunkt (z.B. Platamid 2667 (Arkema) - 60% nachwachsende Rohstoffe) lassen sich alle gewünschten Eigenschaften der Klebstoffbeschichtung bei einem Anteil der nachwachsenden Rohstoffe von mindestens 70%, bevorzugt mindestens 80 % erreichen.

Die Klebstoff-Zusammensetzung enthält eine Kombination einer Polyelektrolytkomplex-Zusammensetzung auf Biobasis, Kohlenhydrate wie zum Beispiel eine gegebenenfalls modifizierte Stärke und kann zusätzlich ein pflanzliches Laufhilfsmittel enthalten. Neben den genannten Bestandteilen können weitere Komponenten wie z.B. Verdicker, Vernetzer, Weichmacher, Laufhilfsmittel und/oder optische Aufheller eingesetzt werden.

Polyelektrolytkomplexe sind Assoziationskomplexe aus gegensätzlich geladenen Partikeln. Hierbei kann es sich z.B. um Polymere mit unterschiedlicher Ladung handeln (Polyanionen und Polykationen), die auf Grund der elektrostatischen Wechselwirkung Komplexe bilden.

Die Polyelektrolytkomplex-Zusammensetzung enthält bevorzugt kationische und anionische Biopolymere wie beispielsweise ganz oder teilweise deacetyliertes Chitosan, Alkali-Lignin, Polysaccharide wie Alginsäure, Pektin, Gummi Arabikum und Carboxymethylcellulose oder Stärke und-Cellulose. Weitere Inhaltstoffe können Weinsäure, Bernsteinsäure, Zitronensäure oder andere biologisch verfügbare Säuren und Wasser sein. Der pH-Wert liegt im Bereich von 1 bis 6, bevorzugt 1,5 bis 5, mehr bevorzugt im Bereich von 1,8 bis 4.

Solche Zusammensetzungen sind beispielsweise aus WO 2018/038671 bekannt, deren Inhalt hierin durch Bezugnahme eingeführt wird. Auch wenn sich diese Druckschrift mit der Verwendung der bioabbaubaren Zusammensetzung als Bindemittel für Fasermaterialien befasst, war es nicht ersichtlich, diese Zusammensetzung auch als Material für den Klebstoffpunkt und insbesondere für den Unterpunkt bei einer Doppelpunktbeschichtung einzusetzen. Denn wie dargelegt, müssen solche Klebstoffbeschichtungen nach Auftragen auf das Trägermaterial eine gute Verbindung mit diesem eingehen und auch in Bezug auf das Waschverhalten und insbesondere den Griff gute Eigenschaften haben. Die Verwendung einer z.B. aus WO 2018/038671 bekannten Zusammensetzung ist nicht möglich. Beim Verdrucken der Formulierung würde die Zusammensetzung stark in das Gewebe einsinken und die Druckschablone nach kurzer Zeit mit angetrockneter Paste belegt werden, was einen sauberen Druck verhindert. Nachteilig erweist sich des Weiteren der niedrige Feststoffanteil der Zusammensetzung sowie der harte Griff der resultierenden Einlage.

Die Zusammensetzung wird daher modifiziert, um die gewünschten Eigenschaften zu erhalten. Beispielsweise wird die dynamische Viskosität eingestellt auf einen Bereich von bevorzugt 8 bis 30 Pas, besonders bevorzugt von 8 bis 20 Pas und insbesondere von 10 bis 15 Pas, wobei die Viskosität mittels Rotationsviskosimeter ( z.B. Haake VT2 plus) gemessen wird. Dies erfolgt bevorzugt durch Verwendung von mineralischen oder organischen Verdickern wie z.B. Bentonite, pyrogener oder gefällter Kieselsäure, Stärke- oder Cellulosederivaten. Es hat sich gezeigt, dass die Zusammensetzung gemäß der Erfindung zu guten Haftungen und guter Waschbeständigkeit führt.

Überraschenderweise hat sich gezeigt, dass in Kombination mit Kohlenhydraten wie einer chemisch modifizierten Stärke und einem pflanzlichen Laufhilfsmittel die oben angeführten Nachteile beseitigt werden können. Die Unterpunktzusammensetzung ist problemlos förderbar, lässt sich gut beschichten und die resultierende Einlage zeigt keine Rückvernietung. Obwohl das Stärkederivat wasserlöslich ist, besitzt die entsprechende Klebstoff-Zusammensetzung eine ausreichende Waschbeständigkeit. Um die Waschbeständigkeit weiter zu verbessern, ist die Zugabe geeigneter Vernetzer möglich.

Stärke für die Anwendung gemäß dieser Erfindung kann aus verschiedenen Nutzpflanzen gewonnen werden, wobei die Anteile der Stärkearten Amylose und Amylopektin je nach Art und Sorte variieren. Bevorzugt sind Stärkepflanzen mit möglichst hohem Amylopektingehalt. Die wichtigsten stärkeliefernden Pflanzen stellen dabei Kartoffeln, Mais und Weizen dar.

Stärke kann mittels physikalischer, enzymatischer oder chemischer Verfahren modifiziert werden, wobei durch Strukturveränderung Eigenschaften wie z.B. Löslichkeit, Quellfähigkeit, Dispergierbarkeit, Extrudierbarkeit und Filmbildung beeinflusst werden. Die Eigenschaften modifizierter Stärkeprodukte sind jedoch nicht nur abhängig von der Art der Modifizierung, sondern auch vom Rohstoff selbst.

Zur chemischen Modifikation von Stärke werden bevorzugt Veretherungs- und Veresterungsreaktionen angewandt, die an den freien OH-Gruppen der Stärkemoleküle stattfinden. Die Veretherung wird nach drei grundlegenden Verfahren durchgeführt: Williamson-Ether-Synthese mit Alkylhalogeniden, Michael-Addition aktivierter Olefine oder Umsetzung mit Epoxiden. Alle Reaktionen werden in der Regel basenkatalysiert.

Die Veresterung von Stärke kann mit organischen oder anorganischen Säuren bzw. deren Derivaten mit oder ohne Zusatz von Aminen oder Amiden als Aktivierungsreagenz durchgeführt werden. Besondere Bedeutung als organische Ester haben die Stärkeacetate, welche aus Acetanhydrid oder mittels Umesterung von Vinylacetat dargestellt werden. Als anorganische Stärkeester sind Derivate der Mineralsäuren Schwefelsäure, Salpetersäure und Phosphorsäure von besonderem Interesse.

In der erfindungsgemäßen Klebstoff-Zusammensetzung erweist sich eine chemisch modifizierte Maisstärke, wie veretherte oder veresterte Stärken durch Verwendung von organischen oder anorganischen Säuren, wie z.B. Phosphorsäuren, insbesondere bevorzugt ein anorganisches Esterderivat der Maisstärke und ganz besonders ein Monophosphatester der Maisstärke als geeignete Komponente, um die gewünschten Eigenschaften zu erzielen.

Bevorzugt werden in der Klebstoff-Zusammensetzung Laufhilfsmittel eingesetzt. Diese Laufhilfsmittel erfüllen als Komponente einer Beschichtungspaste mehrere Funktionen: Feuchthalten der Beschichtung durch Wasserrückhaltevermögen verhindert das Antrocknen der Paste an der Schablone, Schmieren der Schablonenoberfläche: das Laufhilfsmittel bildet einen Film auf der Schablonenoberfläche welcher das Anlagern von Pastenrückständen verhindert und gleichzeitig als Schmiermittel für das Rakelmesser fungieren kann, oder die Beeinflussung des rheologischen Verhaltens der Pasten - Verstärkung des thixotropen Verhaltens, welches für gute Förderbarkeit der Paste, gute Verdruckbarkeit sowie geringeres Einsinken des Beschichtungspunktes in das Trägermaterial sorgt.

In den gängigen wässrigen Pastenzusammensetzungen finden hierzu meist hygroskopische Verbindungen wie (Poly)glycole Verwendung als Laufhilfsmittel. Hier seien z.B. Glycerin, (Poly)-Ethylenglycol, (Poly)Propylenglycol genannt.

Bevorzugt enthält die Klebstoff-Zusammensetzung dieser Erfindung maximal etwa 50 Gew.-%, bevorzugt maximal etwa 45 Gew.-% des Polyelektrolyt-Komplexes, 10 - 30 Gew.-%, bevorzugt 15 - 25 Gew.-%, besonders bevorzugt 25 Gew.-% des Laufhilfsmittels und 15 - 20 Gew.-%, bevorzugt 15 - 18 Gew.-%, besonders bevorzugt 16 Gew.-% der modifizierten Stärke und kann Wasser und optional Aufheller enthalten.

Die Klebstoff-Zusammensetzung dieser Erfindung lässt sich sowohl auf cellulosische Textilien als auch auf alle anderen gängigen Fasertypen wie z.B. Polyester oder Polyamid einsetzen, so dass die erdölbasierten Kunststoffpolymerpasten, welche üblicherweise im Unterpunkt Verwendung finden, durch ein Produkt mit einem hohen Anteil nachwachsender Rohstoffe ersetzt werden können.

Das heißsiegelfähige Flächengebilde dieser Erfindung kann für verschiedene Textilbereiche eingesetzt werden, wie Bekleidung, insbesondere Oberbekleidung, zur Verstärkung von Kragen und Manschetten, aber auch in der Automobil- und Luftfahrtindustrie, oder bei Möbeln oder Polstern, wo solche Flächengebilde eingesetzt werden. Die Flächengebilde der Erfindung zeichnen sich durch gute Haftwerte zum Textilmaterial aus, die sich auch nach mehrmaliger Wäsche nicht verschlechtern.

Gängige Haftwerte liegen in Anwendungen der Herrenoberbekleidung (schwerere Textilien - z.B. 185 g/m²; 97/3 Wolle/Elastan Gewebe) bei größer 10 N/5cm bzw. idealerweise > 15 N/5. Im Bereich der Damenoberbekleidung (leichtere Textilien z.B. 95 g/m², 100% Baumwollgewebe) betragen die Haftungen idealerweise größer 10 N/5cm.

Diese Haftwerte werden auch bei Verwendung der beanspruchten Klebstoff-Zusammensetzung erzielt; gleichzeitig wird ein guter Griff erzielt und die Verarbeitbarkeit der Zusammensetzung führt nicht zu Problemen wie Verstopfen der Druckschablone. Ebenfalls wird kein Durchschlag oder Einsacken der auf den Träger angebrachten Klebstoff-Zusammensetzung in das Trägermaterial beobachtet.

Diese Erfindung wird durch die folgenden Beispiele näher erläutert.

Die entsprechenden Parameter, die in den Beispielen angegeben sind, wurden wie folgt bestimmt.

Messung der Haftung:
Pro zu messender Haftung werden vier 20x5 cm Streifen des Einlagestoffs zugeschnitten. Diese vier Streifen werden unter Verwendung der jeweils angegebenen Fixierbedingungen (Temperatur, Zeit/Geschwindigkeit, Druck) auf 25x7 cm Streifen eines Testoberstoffs so auflaminiert, dass die oberen 2 cm nicht am Oberstoff haften und der Teststreifen hieran vom Oberstoff abgezogen werden kann. Nach Abkühlen des Laminats auf Raumtemperatur, wird der Oberstoff an einer Federwaage befestigt und der Teststreifen senkrecht abgezogen. Als Haftung wird der Mittelwert der vier Messungen angegeben.

Messung der Rückvernietung:
Pro zu messender Rückvernietung werden vier 20x5 cm Streifen des Einlagestoffs zugeschnitten. Jeweils ein Teststreifen wird mit der beschichteten Seite nach unten auf den Oberstoff aufgelegt. Zwei Einlage-Oberstoff Kombinationen werden so übereinandergelegt, dass die umgeschichteten Seiten der Einlagestoffe aufeinanderliegen. Diese vier Streifen (Oberstoff-Einlage-Einlage-Oberstoff) werden gemeinsam unter den angegebenen Bedingungen fixiert. Die Trennkraft der beiden Einlage-Oberstoff Verbünde bzw. die Haftung der beiden Einlagenrückseiten zueinander wird mittels Federwaage in analoger Weise zur Haftungsprüfung bestimmt und ergibt den Wert für die Rückvernietung.

Bestimmung der Waschbeständigkeit bzw. Haftung nach Wäsche:
Jeweils vier 20x5 cm Teststreifen werden wie oben beschrieben auf einen Oberstoff fixiert. Die Haftung vor der Wäsche wird bestimmt. Die Teststreifen werden bei der angegebenen Temperatur in einer handelsüblichen Haushaltswaschmaschine gewaschen und anschließend bei Raumtemperatur getrocknet. Je nach Anforderung wird die Wäsche mehrfach durchgeführt. Nach der letzten Wäsche und Trocknung wird die Haftung gemessen. Als Waschbeständigkeit oder Haftung nach Wäsche wird der Mittelwert der vier Messungen nach der jeweiligen Anzahl Wäschen angegeben. Die Veränderung der Haftung gegenüber der Ausgangshaftung gilt als Maß für die Waschbeständigkeit.

Bestimmung der Alterungsbeständigkeit:
unfixiert/trocken:
   Pro Messung werden sechs 20x5cm Teststreifen des Einlagestoffes zugeschnitten. Vier Teststreifen werden für 4 Wochen bei 60°C in einem Wärmeschrank gelagert. Die verbleibenden zwei Teststreifen werden am Start Lagerperioden auf Testoberstoff fixiert und es wird die Ausgangshaftung bestimmt. Nach Beendigung der 4 Wochen Lagerung werden die Teststreifen auf Oberstoff fixiert und es wird, wie oben beschrieben, die Haftung bestimmt. Die Veränderung der Haftung gegenüber der Ausgangshaftung gilt als Maß für die Alterungsbeständigkeit.
unfixiert/nass:
   Pro Messung werden sechs 20x5cm Teststreifen des Einlagestoffes zugeschnitten. Vier Teststreifen werden für 4 Wochen über einem Wasserbad bei 60°C in einem Exikator gelagert. Die verbleibenden zwei Teststreifen werden am Start Lagerperioden auf Testoberstoff fixiert und es wird die Ausgangshaftung bestimmt. Nach Beendigung der 4 Wochen Lagerung werden die Teststreifen bei Raumtemperatur getrocknet, auf Oberstoff fixiert und es wird, wie oben beschrieben, die Haftung bestimmt. Die Veränderung der Haftung gegenüber der Ausgangshaftung gilt als Maß für die Alterungsbeständigkeit.
fixiert trocken oder nass:
   Pro Messung werden sechs 20x5cm Teststreifen des Einlagestoffes zugeschnitten und unter den angegebenen Fixierbedingungen auf den jeweiligen Testoberstoff laminiert. Von zwei Mustern wird direkt nach dem Abkühlen die Haftung bestimmt. Die restlichen vier Muster werden wie oben beschrieben nass oder trocken für 4 Wochen gelagert und nach Abschluss der Lagerperiode die Haftung bestimmt. Die Veränderung der Haftung gegenüber der Ausgangshaftung gilt als Maß für die Alterungsbeständigkeit.

### Beispiel 1

Die folgende Klebstoff-Zusammensetzung wurde hergestellt.

Zusammensetzung eines Unterpunktes für eine Rasterbeschichtung:

| | |
|---|---|
| Polyelektrolytkomplex-Zusammensetzung | 46,88 Gew.-% |
| (OC-Biobinder^{™} OAK - Organoclick - 100% nachwachsende | |
| Rohstoffe: | |
| Chitosan, Carboxymethylcellulose, Zitronensäure, Wasser) | |
| Modifizierte Stärke (Modifizierung mit Monophosphat) | 15,62 Gew.-% |
| (Aric 4574 - Agrana - >95% nachwachsende Rohstoffe) Propylenglycol pflanzlich | 25,00 Gew.-% |
| (Radianol 4710 - Oleon -100% nachwachsende Rohstoffe) Wasser | 12,50% |

Dynamische Viskosität: 13 Pas
Zusammensetzung für den Oberpunkt als Streupulver:
   Copolyamid (80-200 µm) (Platamid 2667 - Arkema - Anteil der nachwachsenden Rohstoffe 60 Gew.-%)
   Verhältnis Unter-/Oberpunkt: 5/5 (Gewicht)
   Anteil der nachwachsenden Rohstoffe in der gesamten Klebstoff-Zusammensetzung: 80%

Diese Klebstoff-Zusammensetzung wird auf ein Baumwollgewebe mit einem Flächengewicht von 58 g/m² aufgebracht. Der Auftrag des Pastenpunktes erfolgt mittels Schablonensiebdruck (Cp52/0.5, Cp52 = 52 willkürlich/zufällig angeordnete (Computer)Punkte/100 mm² 0,5 = Durchmesser der Punkte in mm). Auf den noch nassen Pastenpunkt wird das Copolyamidpulver auf herkömmliche Weise aufgestreut, der Überschuss abgesaugt und das Flächengebilde anschließend bei 180°C getrocknet.

### Haftungswerte

Auftragsgewicht: 18 g/m² - Fixiertemperatur: 155°C, 15s, 20 N/cm² (Bandfixierpresse Kannegiesser CV 1000 CF)

| | |
|---|---|
| Haftung zu 100% Baumwoll-Teststoff: | 11 N/5cm |
| Haftung zu 97/3 Wolle/Elastan-Teststoff: | 11 N/5cm |
| Rückvernietung | 0 N/5cm |

Waschbeständigkeit/Haftung nach Wäsche:
Auftragsgewicht: 18 g/m² - Fixiertemperatur: 155°C, 15s, 20 N/cm² (Bandfixierpresse Kannegiesser CV 1000 CF)

Haftung zu 100% Baumwoll-Teststoff (Damen-Oberbekleidung;

| | |
|---|---|
| 95 g/m²) nach 3x Waschen bei 30°C | 10 N/5cm |
| Haftung zu 97/3 Wolle/Elastan-Teststoff (Herren-Oberbekleidung; 185 g/m²) nach 3x Waschen bei 30°C | 9 N/5cm |
| Haftung zu 100% Baumwoll-Teststoff Teststoff nach 3xWaschen bei 60°C | 9N/5cm |

Alterungsbeständigkeit:
Auftragsgewicht: 18 g/m² - Fixiertemperatur: 155°C, 15s, 20 N/cm² (Bandfixierpresse Kannegiesser CV 1000 CF)

Muster fixiert auf 100% Baumwoll-Teststoff

| | |
|---|---|
| 0 Wochen: | 11 N/5cm |
| 4 Wochen 60°C/trocken: | 11 N/5cm |
| 4 Wochen 60°C/feucht: | 10 N/5cm |

Muster fixiert auf 97/3 Wolle/Elastan-Teststoff

| | |
|---|---|
| 0 Wochen: | 11 N/5cm |
| 4 Wochen 60°C/trocken: | 10 N/5cm |
| 4 Wochen 60°C/feucht: | 9 N/5cm |

Muster unfixiert nach 4 Wochen 60°C/trocken

| | |
|---|---|
| Haftung auf 100% Baumwoll-Teststoff | 10 N/5cm |

| | |
|---|---|
| Haftung auf 97/3 Wolle/Elastan-Teststoff | 10 N/5cm |

Muster unfixiert nach 4 Wochen 60°C/feucht

| | |
|---|---|
| Haftung auf 100% Baumwoll-Teststoff | 10 N/5cm |
| Haftung auf 97/3 Wolle/Elastan-Teststoff | 9 N/5cm |

### Vergleichsbeispiel 1

Zusammensetzung Pastenpunkt:

| | |
|---|---|
| Polyelektrolytkomplex-Zusammensetzung | 96,00 Gew.-% |
| (OC-Biobinder^{™} OAK - Organoclick - 100% nachwachsende Rohstoffe) | |
| Kieselgel als Verdicker (HDK N 20 - Wacker) | 4,00 Gew.-% |

Dynamische Viskosität: 15 Pas

Oberpunkt (Streupulver):
Copolyamid (80-200µm) (Platamid 2667 - Arkema - Anteil nachwachsende Rohstoffe 60 Gew.-%)
Verhältnis Unter/Oberpunkt: 5/5 (Gewicht)
Anteil der nachwachsenden Rohstoffe der Klebstoff-Zusammensetzung: 80 Gew.-%

Diese Klebstoff-Zusammensetzung wird auf ein Baumwollgewebe mit einem Flächengewicht von 58 g/m² aufgebracht. Der Auftrag des Pastenpunktes erfolgt mittels Schablonensiebdruck (Cp52/0.5). Auf den noch nassen Pastenpunkt wird das Copolyamidpulver aufgestreut, der Überschuss abgesaugt und das Flächengebilde anschließend bei 180°C getrocknet.

Auftragsgewicht: 15 g/m² - Fixiertemperatur: 155°C, 15s, 20 N/cm² (Bandfixierpresse Kannegiesser CV 1000 CF)

| | |
|---|---|
| Haftung zu 100% Baumwoll-Teststoff (wie bei Beispiel 1): | 10 N/5cm |
| Haftung zu 97/3 Wolle/Elastan-Teststoff (wie bei Beispiel 1) | 11 N/5cm |

Waschbeständigkeit:

| | |
|---|---|
| Haftung zu 100% Baumwoll-Teststoff nach 3x Waschen bei 60°C | 8 N/5cm |
| Haftung zu 97/3 Wolle/Elastan-Teststoff nach 3x Waschen bei 60°C | 9 N/5cm |

Das Flächengebilde gemäß Vergleichsbeispiel 1 hat einen harten, steifen Griff, und es wurde auch ein Durchschlag bzw. Einsacken des Punktes in das Baumwoll-Gewebe beobachtet. Besonders nachteilig erweist sich das schnelle Antrocknen der Zusammensetzung auf der Schablone, welches zu Fehlern im Beschichtungsbild und einem unregelmäßigen Auftrag führt. Dies zeigt dass die Zusammensetzung zu schlechten Ergebnissen führt, weil sie keine modifizierte Stärke und auch kein Laufhilfsmittel enthält.

### Beispiel 2

Beschichtung von 25 g/m² PES-Vlies mit Pastenpunktzusammensetzung aus Beispiel 1 und einem konventionellen Copolyamidpulver (Smp. 118-128°C - Schaettifix 5130)

Haftung:
Auftragsgewicht: 10 g/m² - Fixiertemperatur: 127°C, 15s, 20 N/cm² (Bandfixierpresse Kannegiesser CV 1000 CF)
Haftung zu 100% Baumwoll-Teststoff (wie bei Beispiel 1):
   5 N/5cm - Vlies reißt
Haftung zu 97/3 Wolle/Elastan -Teststoff:
   5 N/5cm - Vlies reißt

Waschbeständigkeit:
Haftung zu 100% Baumwoll-Teststoff nach 3x 40°C Wäsche:
   5 N/5cm - Vlies reißt
Haftung zu 97/3 Wolle/Elastan -Teststoff nach 3x 40°C Wäsche:
   5 N/5cm - Vlies reißt

Dieses Beispiel zeigt, dass die Haftung des Pastenpunktes zum Baumwoll-Teststoff höher ist als die Einlage bzw. das beschichtete PES-Vlies selbst.

### Beispiel 3

Beschichtung von 50 g/m² Biobaumwoll-Vlies mit Pastenpunktzusammensetzung aus Beispiel 1 und CopolyamidPulver (80-200 µm) (Platamid 2667 - Arkema - Anteil an nachwachsenden Rohstoffe 60 Gew.-%)
Auftragsgewicht: 13 g/m² - Verhältnis Unter/Oberpunkt: 4/6 (Gewicht) - Fixiertemperatur: 150°C, 15s, 20 N/cm² (Bandfixierpresse Kannegiesser CV 1000 CF)
Anteil der nachwachsenden Rohstoffe in der gesamten Klebstoff-Zusammensetzung: 75 Gew.-%

Haftung zu 100% Baumwoll-Teststoff (wie in Beispiel 1):
   15 N/5cm - Vlies reißt
Haftung zu 97/3% Wolle/Elastan-Teststoff (wie bei Beispiel 1):
   12 N/5cm - Vlies reißt

Waschbeständigkeit:
Haftung zu 100% Baumwoll-Teststoff (wie bei Beispiel 1) nach 3x 40°C Wäsche: 11 N/5cm - Vlies reißt
Haftung zu 97/3% Wolle/Elastan-Teststoff nach 3×40°C Wäsche: 12 N/5cm - Vlies reißt

Auch bei diesem Beispiel zeigt sich, dass die Klebstoff-Zusammensetzung eine hohe Haftung zum Vlies aufweist, die bis zum Reißen des Vlieses aufrechterhalten bleibt.

## Patentansprüche

1. Heißsiegelbares, textiles Flächengebilde mit einem Träger auf Basis eines Gewebes, Gewirkes, gegebenenfalls mit Schusseintrag, oder eines Vlieses und einer darauf aufgebrachten Klebstoffbeschichtung,
**dadurch gekennzeichnet, dass**
die Klebstoffbeschichtung in Form eines Ober- und Unterpunktes aufgebracht ist, 70 - 100 Gew.-% der Klebstoffbeschichtung aus nachwachsenden Rohstoffen bestehen, und
der Unterpunkt aus einer Klebstoff-Zusammensetzung aus bis zu 100% nachwachsenden Rohstoffen mittels Kombination einer biobasierten Polyelektrolytkomplex-Zusammensetzung mit Kohlenhydraten und optionalen weiteren Komponenten wie Verdicker, Vernetzer, Laufhilfsmittel und optischem Aufheller aufgebaut ist.

2. Heißsiegelbares, textiles Fächengebilde nach Anspruch 1, **dadurch gekennzeichnet, dass** die Klebstoff-Zusammensetzung eine dynamische Viskosität von 8 - 30 Pas hat, die mittels Rotationsviskosimeter gemessen ist.

3. Heißsiegelbares textiles Flächengebilde nach Ansprüch 1 oder 2, **dadurch gekennzeichnet, dass** die biobasierte Polyelektrolytkomplex-Zusammensetzung Chitosan, Carboxymethylcellulose und eine organische Säure enthält.

4. Heißsiegelbares textiles Flächengebilde nach einem der Ansprüche 1 bis 3, **dadurch gekennzeichnet, dass** die Verdicker ausgewählt sind aus mineralischen und organischen Verdickern.

5. Heißsiegelbares textiles Flächengebilde nach Anspruch 4, **dadurch gekennzeichnet, dass** der Verdicker ausgewählt ist aus Stärke, die eine chemisch modifizierte Stärke ist.

6. Heißsiegelbares textiles Flächengebilde nach einem der Ansprüche 1 bis 5, **dadurch gekennzeichnet, dass** die Klebstoff-Zusammensetzung maximal etwa 50 Gew.-% des Polyelektrolytkomplexes, 10 - 30 Gew.-% des Laufhilfsmittels und 15 - 20 Gew.-% modifizierte Stärke und gegebenenfalls Wasser und Aufheller enthält.

7. Verwendung eines heißsiegelbaren textilen Flächengebildes wie in einem der Ansprüche 1 bis 6 definiert für Bekleidungsstoffe und technischen Textilien.

8. Verwendung nach Anspruch 7 für Möbel, Polster, Automobil-und Luftfahrtindustrie.

## Claims

1. Heat-sealable textile sheet material having a support based on a woven fabric, a knitted fabric, optionally with weft insertion, or a non-woven fabric, and an adhesive coating applied thereon;
**characterised in that**
the adhesive coating is applied in the form of a top dot and bottom dot, 70 - 100 wt% of the adhesive coating consist of renewable raw materials, and
the bottom dot is composed of an adhesive composition of up to 100% renewable raw materials by combining a bio-based polyelectrolyte complex composition with carbohydrates and optional further components such as thickeners, crosslinking agents, glidants and optical brighteners.

2. Heat-sealable textile sheet material according to claim 1, **characterised in that** the adhesive composition has a dynamic viscosity of 8 - 30 Pas, which is measured by rotational viscometer.

3. Heat-sealable textile sheet material according to claim 1 or 2, **characterised in that** the bio-based polyelectrolyte complex composition contains chitosan, carboxymethylcellulose and an organic acid.

4. Heat-sealable textile sheet material according to one of the claims 1 to 3, **characterised in that** the thickeners are selected from mineral and organic thickeners.

5. Heat-sealable textile sheet material according to claim 4, **characterised in that** the thickener is selected from starch which is a chemically modified starch.

6. Heat-sealable textile sheet material according to one of the claims 1 to 5, **characterised in that** the adhesive composition contains a maximum of around 50 wt% of the polyelectrolyte complex, 10 - 30 wt% of the glidant and 15 - 20 wt% modified starch and optionally water and brightener.

7. Use of a heat-sealable textile sheet material as defined in one of the claims 1 to 6 for clothing fabrics and technical textiles.

8. Use according to claim 7 for furniture, upholstery, and in the automotive and aerospace industries.

## Revendications

1. Structure textile plane thermoscellable avec un support fondé sur un tissu, un tricot, éventuellement doté d'une insertion de trame, ou un non-tissé et d'un revêtement adhésif appliqué sur ce dernier,
**caractérisée en ce que**
le revêtement adhésif est appliqué sous la forme d'un point supérieur et inférieur, de 70 à 100 % en poids du revêtement adhésif sont constitués de matières premières renouvelables, et
le point inférieur consiste en une composition adhésive fabriquée à partir de matières premières jusqu'à 100 % renouvelables au moyen d'une combinaison d'une composition de complexe polyélectrolyte biosourcé avec des glucides et d'autres composants facultatifs tels que des épaississants, des agents de réticulation, des solvants et des azurants optiques.

2. Structure textile plane thermoscellable selon la revendication 1, **caractérisée en ce que** la composition adhésive présente une viscosité dynamique de 8 à 30 Pas, qui est mesurée à l'aide d'un viscosimètre rotatif.

3. Structure textile plane thermoscellable selon la revendication 1 ou 2, **caractérisée en ce que** la composition de complexe polyélectrolyte biosourcé contient du chitosane, de la carboxyméthylcellulose et un acide organique.

4. Structure textile plane thermoscellable selon l'une quelconque des revendications 1 à 3, **caractérisée en ce que** les épaississants sont choisis parmi des épaississants minéraux et organiques.

5. Structure textile plane thermoscellable selon la revendication 4, **caractérisée en ce que** l'épaississant est choisi pour être de l'amidon, qui est un amidon chimiquement modifié.

6. Structure textile plane thermoscellable selon l'une quelconque des revendications 1 à 5, **caractérisée en ce que** la composition adhésive contient au maximum environ 50 % en poids du complexe polyélectrolyte, de 10 à 30 % en poids du solvant et de 15 à 20 % en poids d'amidon modifié et contient éventuellement de l'eau et un azurant.

7. Utilisation d'une structure textile plane thermoscellable telle que définie à l'une quelconque des revendications 1 à 6 pour des tissus d'habillement et des textiles techniques.

8. Utilisation selon la revendication 7 pour les industries du meuble, du rembourrage, de l'automobile et de l'aérospatiale.
